# NEUE EUROPÄISCHE PATENTSCHRIFT

(11) **EP 2 140 968 B2**
(45) Veröffentlichungstag und Bekanntmachung des Hinweises auf die Entscheidung über den Einspruch: **08.06.2022**
(45) Hinweis auf die Patenterteilung: 07.05.2014
(21) Anmeldenummer: 09008497.1
(22) Anmeldetag: 30.06.2009
(51) Int. Cl.: B23P 19/06, F16B 37/06

(54) **Vorrichtung zum Einpressen von Befestigungselementen**
Device for pressing fasteners
Dispositif destinés à la compression d'éléments de fixation

(30) Priorität: 03.07.2008 DE 102008032694
(43) Veröffentlichungstag der Anmeldung: 06.01.2010
(73) Patentinhaber: Arnold & Shinjo GmbH & Co. KG, 74677 Dörzbach (DE)
(72) Erfinder: Beck, Friedrich, 74613 Öhringen (DE)
(74) Vertreter: Patentanwälte Ruff, Wilhelm, Beier, Dauster & Partner mbB

(56) Entgegenhaltungen:
- WO-A1-02/084131
- WO-A1-2007/059742
- DE-A1- 19 535 537
- JP-A- 5 154 722
- US-A- 3 670 943
- US-A- 3 938 239
- US-A- 4 995 543
- US-B1- 6 205 641
- Dokumente zur Vorbenutzung Rifast Universal Workstation UWS 500"

## Beschreibung

Die Erfindung betrifft eine Vorrichtung zum Einpressen von einzupressenden Befestigungselementen.

Zur Befestigung von Gegenständen an aus Blech bestehenden Bauteilen gibt es Befestigungselemente, die mit dem Blech in einer Fügetechnik verbunden werden und beispielsweise Gewinde aufweisen. Dadurch wird es möglich, auch an Blech, in dem keine Gewindebohrung angeordnet werden kann, Verschraubungen vorzunehmen. Beispielsweise gibt es Einstanzmuttern, die mit dem Blech verpresst werden können.

Es gibt aber auch Fälle, wo mit dem Blech Schrauben verbunden werden sollen, die ähnlich wie ein Stehbolzen wirken sollen. Hierbei erfolgt eine Verbindung mit dem Rand eines vorher hergestellten Lochs. Dazu muss der Schraubenschaft mit dem Gewinde durch das Loch hindurch geschoben und der am Ende des Schraubenschafts vorhandene Schraubenkopf mit dem Rand des Lochs verpresst werden. Dabei kann es Fälle geben, wo ein Bauteil eine größere Zahl von Löchern aufweist, denen gegenüber die Befestigungselemente dann ausgerichtet werden müssen. Eine solche Ausrichtung ist erforderlich, damit das Gewinde beim Vorwärtsschieben durch das Loch hindurch nicht an den Rändern des Lochs hängenbleibt oder an diesen abgeschabt wird.

### (Beginn einer Einfügung)

Es ist bereits eine Vorrichtung zum Einpressen von Einstanzmuttern bekannt, bei deren in einer Matrize ein Kanal mit einem Zapfen ausgebildet ist, der durch ein Loch des Bauteils, in dem die Einstanzmutter angebracht werden soll, hindurchgeschoben wird und während des Einstanzvorgangs die Einstanzmutter führt. Die Einstanzmutter ragt nicht über die der Matrize zugeordnete Seite des Bauteils hinaus (JP 5-154722).

Weiterhin ist ein Verfahren zum Einbringen und Verankern eines Verbindungselements in einem Werkstück sowie eine Vorrichtung zum Durchführen des Verfahrens bekannt. Das Verbindungselement ist eine Einstanzmutter, die in eingestanztem Zustand nicht über die der Matrize zugeordnete Seite des Bauteils hinaus ragt. es ist auch die Verwendung für das anbringen eines Bolzens erwähnt, ohne nähere Einzelheiten (WO 2007/059742 A).

### (Ende der Einfügung)

Der Erfindung liegt die Aufgabe zu Grunde, eine Möglichkeit zu schaffen, wie derartige Befestigungselemente in ein Loch eines Bauteils eingepresst werden können, ohne dass das Befestigungselement durch die Ränder des Lochs beeinträchtigt wird.

Zur Lösung dieser Aufgabe schlägt die Erfindung eine Vorrichtung mit den Merkmalen des Anspruchs 1 vor. Weiterbildungen der Erfindung sind Gegenstand von Unteransprüchen.

Zum Befestigen eines solchen Befestigungselements wird also das Bauteil zwischen der Matrize und dem Stempel festgehalten. Von der Seite der Matrize her wird der Zapfen in das Loch geführt, so dass er das Bauteil ausrichten kann. In dem Stempel ist in einer Ausnehmung das Befestigungselement vollständig untergebracht und wird aus dieser Ausnehmung mithilfe einer Vorschubeinrichtung nach vorne bewegt, wobei jetzt wegen der Ausrichtung des Lochs das Gewinde nicht am Rand des Lochs schabt und daher auch nicht beschädigt wird.

In Weiterbildung der Erfindung kann vorgesehen sein, dass der Außendurchmesser des Zapfens in seinem durch das Bauteil hinaus ragenden Teil dem Durchmesser des Lochs in dem Bauteil entspricht. Auf diese Weise kann eine exakte Ausrichtung erfolgen. Falls eine vollständig exakte Ausrichtung des Bauteils durch den Zapfen nicht erforderlich ist, kann der Zapfen in diesem Bereich auch einen etwas kleineren Durchmesser aufweisen.

In Weiterbildung der Erfindung kann vorgesehen sein, dass der Zapfen in der Matrize derart geführt ist, dass er bis zum Eingriff mit dem vorderen Ende des Befestigungselements in dem Kanal des Stempels bewegt werden kann. Das Befestigungselement wird in dem Stempel üblicherweise nur im Bereich seines Kopfs gehalten. Bei längeren Befestigungselementen kann dabei aufgrund von Toleranzen bei der Herstellung des Kopfes, aufgrund von Toleranzen in der Vorschubeinrichtung oder dergleichen die Gefahr bestehen, dass der Schaft leicht schräg verläuft. Je länger der Schaft des Befestigungselements ist, desto größer wird dann die Gefahr, dass trotz der Ausrichtung des Bauteils das vordere Ende des Befestigungselements an dem Rand des Lochs anschlägt. Wenn nun aber der Zapfen bis zum Eingriff in das vordere Ende des Befestigungselements bewegbar ist, so kann er dabei mithelfen, das Befestigungselement axial auszurichten beziehungsweise gerade zu richten.

Um an dem Befestigungselement angreifen zu können, kann erfindungsgemäß vorgesehen sein, dass das vordere Ende des Zapfens komplementär zu dem vorderen Ende des Befestigungselements ausgebildet ist.

Insbesondere kann vorgesehen sein, dass der Zapfen eine Ausrichteinrichtung oder Ausrichtausbildung aufweist, um in dem genannten Fall eine Ausrichtung des vorderen Endes des Befestigungselements zu bewirken. Dies kann beispielsweise in der Weise geschehen, dass der Zapfen ein vorderes kegelstumpfförmiges Ende mit einer Spitze aufweist, die in eine entsprechende Vertiefung im vorderen Ende des Befestigungselements eingreifen kann und bei weiterem Vorschub aufgrund der Trichterwirkung die Ausrichtung bewirkt.

Auch die umgekehrte Ausbildung ist natürlich möglich.

Zur Vorwärtsbewegung des Zapfens kann vorgesehen sein, dass dieser unter Federdruck steht, also beispielsweise unter dem Druck einer Gasfeder oder einer mechanischen Feder. Es ist aber ebenfalls möglich, dass er von einer Kolbeneinrichtung beaufschlagt wird, bei der die Vorwärtsbewegung und auch das Zurückziehen gesteuert werden kann.

Diese Möglichkeit der Steuerung der Bewegung des Zapfens kann besonders sinnvoll auch dann angewendet werden, wenn der Zapfen dazu verwendet wird, nach Einpressen des Befestigungselements das Bauteil von der Matrize auszuwerfen. Hierbei kann der Zapfen ebenfalls an der Spitze des Befestigungselements angreifen. Da dieses jetzt aber mit dem Bauteil fest verbunden ist, wirkt dieser Angriff in der Weise, dass er das Bauteil von der Matrize löst.

Erfindungsgemäß kann in Weiterbildung vorgesehen sein, dass der Zapfen selbst in dem Kanal, in dem er verschoben wird, auch geführt wird. Er kann zu diesem Zweck flächig an der Innenwand des Kanals anliegen. Der Teil, der mit dem Lochrand zusammenwirken soll, kann dementsprechend einen etwas kleineren Durchmesser aufweisen.

Das Einpressen von Befestigungselementen in ein Loch eines Bauteils kann folgendermaßen erfolgen. Das Bauteil wird zwischen einem Stempel und einer Matrize festgehalten. Von der einen Seite her wird in und durch das Loch das vordere Ende eines Zapfens eingeschoben, während anschließend von der anderen Seite her das Befestigungselement in Richtung auf das Loch vorgeschoben wird. Bei dem Vorschieben des Befestigungselements in der Weise, dass der Schaft des Befestigungselements durch das Loch hindurch bewegt wird, weicht der Zapfen zurück. Das Befestigungselement wird während des Durchschiebens von dem Zapfen geführt. Sobald das Befestigungselement mit der Unterseite seines Kopfs an dem Bauteil anliegt, erfolgt eine Verpressung zwischen dem Kopf des Befestigungselements, seinem Schaft im Bereich der Unterseite des Kopfs und dem Rand des Lochs des Blechbauteils.

Es kann vorgesehen sein, dass vor der Festlegung des Bauteils zwischen der Matrize und dem Stempel das Bauteil durch den vorgeschobenen Zapfen ausgerichtet und anschließend das Bauteil festgelegt wird.

Es kann auch vorgesehen sein, dass zunächst der Zapfen soweit durch das Loch hindurch geschoben wird, bis sein vorderes Ende in Eingriff mit dem vorderen Ende des Befestigungselements gelangt. Beim Durchschieben des Schafts des Befestigungselements kann dieses durch den Zapfen geführt werden, so dass das Gewinde nicht an dem Rand des Lochs anstößt.

Es ist auch möglich, dass mithilfe einer Ausrichteinrichtung der Zapfen das möglicherweise leicht schräg stehende Befestigungselement zunächst gerade richtet, bevor mit dem Durchschieben des Schafts des Befestigungselements begonnen wird.

Beim Durchschieben des Schafts des Befestigungselements weicht der Zapfen zurück. Dies kann gesteuert geschehen, beispielsweise indem der Druck, der den Zapfen vorwärts schiebt, in bestimmter Weise verringert wird. Dadurch lässt sich in gewissem Ausmaß die Geschwindigkeit des Einpressens des Befestigungselements regulieren.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Anordnung eines mit einem Loch versehenen Blechs zwischen Stempel und Matrize;
- Figur 2: die Verformung des Blechs in Lochbereich in einem ersten Schritt;
- Figur 3: das Vorwärtsschieben des Befestigungselements in die Matrize;
- Figur 4: das fertige Ergebnis der Befestigung;
- Figur 5: eine der Figur 1 entsprechende Darstellung bei einer zweiten Ausführungsform;
- Figur 6: eine der Figur 2 entsprechende Darstellung der zweiten Ausführungsform;
- Figur 7: eine der Figur 3 entsprechende Darstellung der zweiten Ausführungsform;
- Figur 8: eine der Figur 4 entsprechende Darstellung der zweiten Ausführungsform;
- Figur 9: eine geschnittene Darstellung der Befestigung des eingepressten Befestigungselements;
- Figur 10: eine der Figur 9 entsprechende Darstellung in einer anderen Schnittebene.

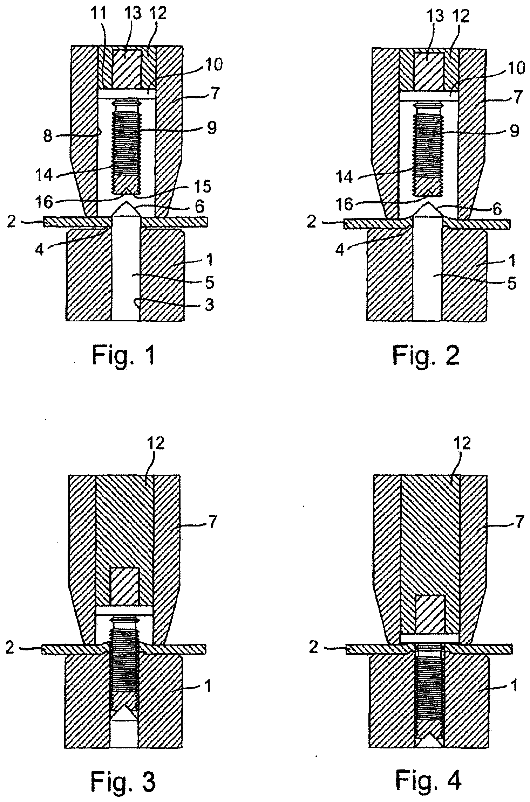

Die in den Figuren 1 bis 8 schematisch dargestellte Vorrichtung zum Einpressen von Befestigungselementen in Löcher von Bauteilen enthält eine Matrize 1, die auf der einen Seite des Bauteils angeordnet ist. Als Bauteil wird in dem hier dargestellten Ausführungsbeispiel ein ebenes Blech 2 verwendet, das eine Öffnung in Form eines kreisrunden Lochs aufweist. Das Bauteil 2 wird so positioniert, dass es auf der Matrize 1 so aufliegt, dass das Loch mit einem in der Matrize ausgebildeten Kanal 3 fluchtet. Der Kanal 3 mündet in der dem Bauteil 2 zugewandten Fläche aus und ist dort von einem Wulst 4 umgeben.

In dem Kanal 3 ist ein in Längsrichtung des Kanals 3 verschiebbarer Zapfen 5 gelagert, der über den größten Teil seiner Länge einen Außendurchmesser aufweist, der dem Innendurchmesser des Kanals 3 entspricht. Dadurch ist der Zapfen 5 flächig in dem Kanal 3 geführt. An seinem aus der Matrize 1 herausragenden Ende, dem freien Ende, weist der Zapfen 5 die Form eines Kegels 6 auf.

Mit der Matrize 1 wirkt ein Stempel 7 zusammen, der koaxial zu der Matrize 1 ausgerichtet ist. Mit seinem vorderen dem Bauteil 2 zugewandten Ende liegt er auf dem Bauteil 2 auf und beaufschlagt dies gegen die Oberfläche des Wulstes 4. In dem Stempel 7 ist ebenfalls ein Kanal 8 gebildet, der koaxial zu dem Kanal 3 der Matrize 1 verläuft. Der Kanal 8 bildet einen Aufnahmeraum für ein Befestigungselement 9 in Form eines Stehbolzens beziehungsweise einer Schraube. Die Schraube weist einen Schraubenkopf 10 auf, der flach ausgebildet ist und eine ebene Oberfläche 11 aufweist. Der Außendurchmesser des Kopfs 10 der Schraube 9 entspricht etwa dem Innendurchmesser des Kanals 8. An der Oberseite 11 des Kopfs 10 der Schraube 9 greift eine Vorschubeinrichtung 12 an, die einen Magneten 13 aufweist. Dadurch wird die Schraube in dem Kanal gehalten. In der dargestellten idealisierten Form ist die Schraube mit ihrem Schaft 14 gerade gerichtet, so dass eine Ausrichtung nicht nötig erscheint. In der Praxis kann allerdings die Richtung des Schafts 14 der Schraube 9 leicht schräg verlaufen.

In dem Stirnende 15 des Schafts 14 der Schraube 9 ist eine kegelförmige Vertiefung 16 ausgebildet, deren Kegelwinkel etwa dem Kegelwinkel des freien Endes 6 des Zapfens 5 entspricht. In einem ersten Schritt wird gegenüber der Position der Figur 1 der Stempel 7 der Matrize 1 angenähert oder umgekehrt. Dadurch verformt sich das Bauteil 2 im Bereich des Randes des Lochs, da der Wulst 4 das Blech an dieser Stelle nach oben drückt. Das Ergebnis ist in Figur 2 dargestellt. Hier liegt nun die Unterseite des Blechbauteils außerhalb des Wulstes 4 auch ohne Zwischenraum auf der entsprechenden Stirnfläche der Matrize 1 auf.

Anschließend wird der Zapfen 5 vorwärts geschoben, bis seine Spitze in die Vertiefung 16 der Stirnfläche 15 der Schraube 9 eingreift. Anschließend wird die Vorschubeinrichtung 12 vorwärts geschoben, wobei bei dieser Vorwärtsbewegung des Befestigungselements der Zapfen 5 sich zurück schieben lässt. Ein Zwischenstadium ist in Figur 3 dargestellt.

Sobald die Unterseite des Schraubenkopfs 10 auf der Oberseite des Bauteils 2 aufliegt, erfolgt durch weiteres Pressen mithilfe der Vorschubeinrichtung 12 ein Einpressen der Unterseite des Schraubenkopfs und eines Vorsprungs am Schraubenschaft direkt unterhalb des Kopfs in den Rand des Lochs des Bauteils 2. Das Ergebnis ist in Figur 4 dargestellt. Jetzt ist das Befestigungselement vollständig mit dem Bauteil 2 verbunden. Wird nun der Stempel 7 mit der Vorschubeinrichtung 12 zurück gezogen, so kann durch eine nochmalige Vorwärtsbewegung des Zapfens 5 das Bauteil von der Matrize abgehoben und ausgeworfen werden.

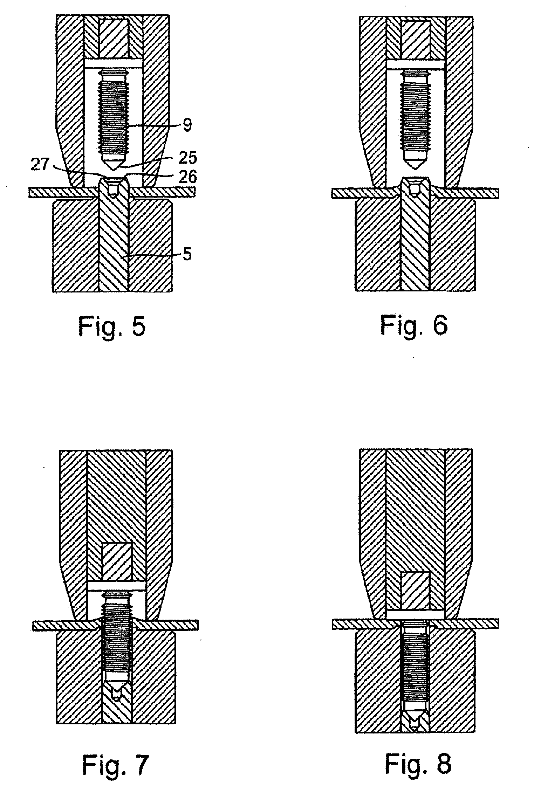

Während bei der Ausführungsform nach Figur 1 bis Figur 4 das vordere Stirnende 15 des Befestigungselements eine kegelförmige Vertiefung aufweist, zeigen die Figuren 5 bis 8 entsprechende Darstellungen, bei denen das vordere Ende 25 des Befestigungselements 9 kegelförmig ausgebildet ist, während das vordere Ende 26 des Zapfens 5 eine teilweise kegelförmige Vertiefung 27 aufweist. Außerhalb der Vertiefung ist allerdings auch in diesem Fall der Zapfen 5 leicht kegelförmig ausgebildet, da auf diese Weise ein Ausrichten des Bauteils 2 gegenüber der Matrize 1 durchgeführt werden können soll.

Die übrigen Stadien des Verfahrens, die in den Figuren 6 bis 8 dargestellt sind, entsprechend den Stadien des Verfahrens, die in den Figuren 2 bis 4 dargestellt sind, so dass eine Wiederholung nicht erforderlich ist.

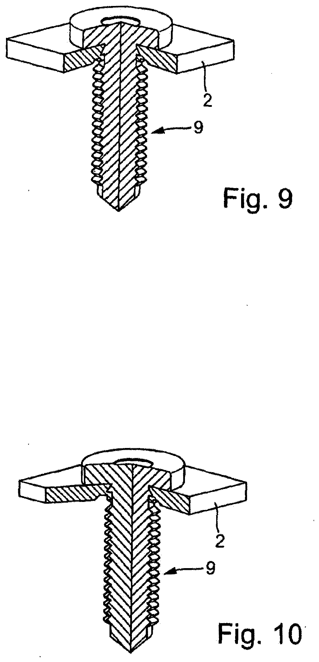

Figur 9 und Figur 10 zeigen in einer Schnittdarstellung, wie das Befestigungselement in dem Bauteil befestigt ist. Man kann insbesondere dem Schnitt der Figur 9 entnehmen, dass durch das Verpressen der Vorsprung an dem Schaft in die Wand des Lochs eingepresst worden ist.

Bei den in den Figuren 1 bis 8 dargestellten Ausführungsformen wird eine Matrize 1 verwendet, die um die Öffnung herum einem Wulst 4 aufweist. Das Verfahren und die Vorrichtung sind natürlich auch anwendbar, wenn eine Matrize verwendet wird, die keinen solchen Wulst 4 aufweist.

Eine Vorrichtung zum Einpressen von Befestigungselementen mit einem Schaft in ein Loch eines aus Blech bestehenden Bauteils wird vorgeschlagen. Das Blechbauteil wird auf einer Matrize gelegt, und von der anderen Seite her mit einem Stempel beaufschlagt. Innerhalb des Stempels ist das Befestigungselement mit seinem Gewindeschaft nach vorne ausgerichtet untergebracht. Von der Seite der Matrize her wird ein Zentrierzapfen in das Loch, mit dem das Befestigungselement verpresst werden soll, eingeführt. Der Zapfen wird so weit vorgeschoben, bis er in Eingriff mit dem Befestigungselement gerät. Dort erfolgt eine Zentrierung und Ausrichtung des Befestigungselements durch den Zapfen. Beim Einpressen wird durch den Einpressvorgang der Zapfen zurückgeschoben, wobei er während dieser Bewegung in Eingriff mit dem Befestigungselement bleibt. Dadurch wird das Befestigungselement in der Weise durch den Zapfen geführt, dass ein Gewinde nicht am Rand des Lochs anstößt und damit erhalten bleibt.

## Patentansprüche

1. Vorrichtung zum Einpressen von Befestigungselementen, mit
einem Stempel (7) zur Auflage auf bzw. zur Anlage an einem ein Loch aufweisenden Bauteil (2),
einem in dem Stempel (7) ausgebildeten Kanal (8) zur Aufnahme des Befestigungselements,
einem Vorschubelement (12) zum Vorschub des Befestigungselements (9) in dem Kanal (8) und in das Loch des Bauteils (2),
einer Matrize (1), die
dem Stempel (7) gegenüberliegend angeordnet ist, und
einen Kanal (3) aufweist, der
den durch das Loch des Bauteils ragenden mit einem Gewinde versehenen Schaft (14) aufnimmt, sowie mit
einem in dem Kanal (3) der Matrize (1) verschiebbaren Zapfen (5), der mit seinem vorderen Ende durch das Loch des Bauteils (2) bewegbar ist,
wobei der Zapfen (7) durch das Loch des Bauteils (2) hindurch bis in Eingriff mit dem vorderen Ende des noch vollständig in dem Kanal (8) des Stempels (7) angeordneten Befestigungselements bewegbar ist und wobei das vordere Ende des Zapfens (5) komplementär zu dem vorderen Ende des Befestigungselements ausgebildet ist.

2. Vorrichtung nach Anspruch 1, bei der der Außendurchmesser des Zapfens (5) in seinem durch das Bauteil (2) hinaus ragenden Teil dem Durchmesser des Lochs in dem Bauteil (2) entspricht.

3. Vorrichtung nach einem der vorhergehenden Ansprüche, bei der das vordere Ende (6) des Zapfens (5) eine Ausrichteinrichtung zum axialen Ausrichten des vorderen Endes des Befestigungselements (9) aufweist.

4. Vorrichtung nach einem der vorhergehenden Ansprüche, bei der der Zapfen (5) druckbeaufschlagt, insbesondere federbeaufschlagt ist.

5. Vorrichtung nach einem der vorhergehenden Ansprüche, bei der der Zapfen (5) zum Auswerfen des Bauteils (2) nach Anbringung des Befestigungselements ausgebildet ist.

6. Vorrichtung nach einem der vorhergehenden Ansprüche, bei der der Zapfen (5) in dem Kanal (3) zur Aufnahme des Schafts (14) des Befestigungselements geführt ist.

7. Vorrichtung nach einem der vorhergehenden Ansprüche, bei der der Zapfen (5) einen vorderen Abschnitt aufweist, in dem sein Außendurchmesser geringfügig kleiner ist als der Innendurchmesser des Kanals (3) der Matrize und/oder des Lochs des Bauteils.

## Claims

1. Apparatus by means of which fastening elements are pressed in,
having an upper die (7) for bearing on, or for butting against, a component (2) with a hole,
having a channel (8), which is formed in the upper die (7) and is intended for accommodating the fastening element,
having an advancement element (12) for advancing the fastening element (9) in the channel (8) and into the hole of the component (2),
having a lower die (1), which
is arranged opposite the upper die (7) and
has a channel (3), which
accommodates the threaded shank (14) projecting through the hole of the component,
and having a pin (5), which can be displaced in the channel (3) of the lower die (1) and can have its front end moved through the hole of the component (2), wherein the pin (7) can be moved through the hole of the component (2) until it engages with the front end of the fastening element, which is still fully arranged in the channel (8) of the upper die (7), and wherein the front end of the pin (5) is designed to complement the front end of the fastening element.

2. Apparatus according to Claim 1, wherein the external diameter of the pin (5), in that part of the latter which projects through the component (2), corresponds to the diameter of the hole in the component (2).

3. Apparatus according to either of the preceding claims, wherein the front end (6) of the pin (5) has an aligning device for axially aligning the front end of the fastening element (9).

4. Apparatus according to one of the preceding claims, wherein the pin (5) is pressure-activated, in particular spring-activated.

5. Apparatus according to one of the preceding claims, wherein the pin (5) is designed for ejecting the component (2) once the fastening element has been fitted.

6. Apparatus according to one of the preceding claims, wherein the pin (5) is guided in the channel (3) for accommodating the shank (14) of the fastening element.

7. Apparatus according to one of the preceding claims, wherein the pin (5) has a front portion in which its external diameter is slightly smaller than the internal diameter of the channel (3) of the lower die and/or of the hole of the component.

## Revendications

1. Dispositif destiné à insérer en force des éléments de fixation, ledit dispositif comprenant un poinçon (7) destiné à être posé sur ou appliqué contre un composant (2) présentant un trou,
un canal (8) réalisé dans le poinçon (7) et destiné à recevoir l'élément de fixation,
un élément d'avance (12) destiné à faire avancer l'élément de fixation (9) dans le canal (8) et jusque dans le trou du composant (2),
une matrice (1) qui est disposée en regard du poinçon (7), et qui comporte un canal (3) qui reçoit la tige (14) saillant à travers le trou du composant et munie d'un filetage, et comprenant également
un tourillon (5) pouvant être déplacé dans le canal (3) de la matrice (1) et pouvant être déplacé avec son extrémité avant à travers le trou du composant (2),
le tourillon (7) pouvant être déplacé à travers le trou du composant (2) jusqu'à venir en prise avec l'extrémité avant de l'élément de fixation encore complètement disposé dans le canal (8) du poinçon (7),
l'extrémité avant du tourillon (5) étant réalisée de manière complémentaire à l'extrémité avant de l'élément de fixation.

2. Dispositif selon la revendication 1, dans lequel le diamètre extérieur du tourillon (5), dans sa partie faisant saillie au-delà du composant (2), correspond au diamètre du trou dans le composant (2).

3. Dispositif selon l'une quelconque des revendications précédentes, dans lequel l'extrémité avant (6) du tourillon (5) présente un dispositif d'alignement pour l'alignement axial de l'extrémité avant de l'élément de fixation (9).

4. Dispositif selon l'une quelconque des revendications précédentes, dans lequel le tourillon (5) est sollicité par pression, en particulier par un ressort.

5. Dispositif selon l'une quelconque des revendications précédentes, dans lequel le tourillon (5) est réalisé de manière à éjecter le composant (2) après le montage de l'élément de fixation.

6. Dispositif selon l'une quelconque des revendications précédentes, dans lequel le tourillon (5) est guidé dans le canal (3) pour recevoir la tige (14) de l'élément de fixation.

7. Dispositif selon l'une quelconque des revendications précédentes, dans lequel le tourillon (5) présente une portion avant, dans laquelle son diamètre extérieur est légèrement inférieur au diamètre intérieur du canal (3) de la matrice et/ou du trou du composant.
